# FASCICULE DE BREVET EUROPEEN

(11) **EP 0 541 155 B1**
(45) Date de publication et mention de la délivrance du brevet: **16.07.1997**
(21) Numéro de dépôt: 92203304.8
(22) Date de dépôt: 28.10.1992
(51) Int. Cl.: B01D 53/34

(54) **Procédé pour épurer un gaz contenant de l'oxyde nitrique**
Verfahren zum Reinigen von Stickstoffoxid enthaltendem Gas
Process for cleaning gas containing nitrogen oxide

(30) Priorité: 08.11.1991 FR 9113974
(43) Date de publication de la demande: 12.05.1993
(73) Titulaire: SOLVAY (Société Anonyme), B-1050 Bruxelles (BE)
(72) Inventeur: De Soete, Gérard, F-92700 Colombes (FR); Ninane, Léon, F-54110 Dombasle-sur-Meurthe (FR); Blondel, Jean-Marie, F-54600 Villers les Nancy (FR)
(74) Mandataire: Anthoine, Paul

(56) Documents cités:
- EP-A- 0 343 673
- WO-A-86/05714
- FR-A- 2 274 338
- US-A- 4 588 569
- US-A- 4 795 619

## Description

L'invention concerne l'épuration d'un gaz en oxyde nitrique (NO).

Les fumées générées par la combustion de matières combustibles gazeuses, liquides ou solides sont habituellement contaminées par des oxydes d'azote provenant de l'azote de l'air atmosphérique et, le cas échéant, de composés azotés présents dans le combustible. Dans ces fumées, la majeure partie des oxydes d'azote est de l'oxyde nitrique (NO), le solde étant constitué principalement par du peroxyde d'azote (NO₂).

La grande toxicité de l'oxyde nitrique et du peroxyde d'azote implique de les éliminer des fumées avant de rejeter celles-ci dans l'atmosphère.

Dans la demande de brevet européen EP-A-343673 (Ceskoslovenska Akademie), on décrit un procédé d'épuration d'un gaz humide en oxydes d'azote, selon lequel on fait circuler le gaz, à une température de 130°C, à travers un lit fluidisé de carbonate de sodium hydraté extra léger (Exemple 13). Le carbonate de sodium extra léger est obtenu en soumettant du carbonate de sodium hydraté contenant plus de 7 molécules d'eau, à plusieurs séquences successives de décompositions thermiques et de séchages.

Ce procédé connu implique l'utilisation de carbonate de sodium hydraté extra léger dont l'obtention est difficile. Il n'est applicable qu'à l'épuration de gaz humides, dont la température est élevée.

L'invention remédie à ces inconvénients du procédé connu décrit plus haut, en fournissant un procédé nouveau qui permet de réaliser une épuration efficace d'un gaz en oxyde nitrique, au moyen d'un réactif dont l'obtention est aisée et qui ne nécessite pas la présence d'humidité dans le gaz, ni une température de travail élevée.

En conséquence, l'invention concerne un procédé pour épurer un gaz en oxyde nitrique, selon la revendication 1

L'invention s'applique à tous les gaz contenant de l'oxyde nitrique (NO). Elle s'applique spécialement aux gaz générés par la combustion de matières combustibles en présence d'air ou d'oxygène. Par la suite, un gaz provenant de la combustion d'une matière combustible sera dénommé "fumée". Dans le cas où l'invention est appliquée à une fumée, la matière combustible n'est pas critique et peut être invariablement un gaz, un liquide ou un solide. Elle peut comprendre un combustible d'origine fossile (tel que le pétrole et ses dérivés, le charbon et le coke), la biomasse ou des substances organiques ou inorganiques inflammables provenant par exemple de déchets ménagers, industriels ou municipaux. L'origine de la fumée n'est pas critique non plus, celle-ci pouvant par exemple provenir d'une centrale thermique de production d'électricité, d'une installation centralisée de chauffage urbain ou d'une installation d'incinération d'ordures ménagères ou municipales.

Le gaz traité dans le procédé selon l'invention contient nécessairement de l'oxyde nitrique (NO). Il peut contenir d'autres oxydes d'azote en plus de l'oxyde nitrique, par exemple de l'oxyde nitreux (N₂O), du trioxyde d'azote (N₂O₃), du pentoxyde d'azote et du peroxyde d'azote (NO₂). Par la suite, les oxydes d'azote du gaz seront désignés dans leur ensemble par la notation NOₓ. En règle générale, la fraction volumique d'oxyde nitrique (NO) parmi l'ensemble des oxydes d'azote (NOₓ) du gaz est d'au moins 50 % et généralement supérieure à 75 % de la quantité totale d'oxydes d'azote; elle peut être de 100 %.

Conformément à l'invention, on met en oeuvre, pour épurer le gaz, un composé de métal alcalin comprenant du carbonate de sodium hydraté. On entend désigner par l'expression "carbonate de sodium hydraté" les hydrates du carbonate de sodium comprenant 1, 7 ou 10 molécules d'eau, ainsi que les mélanges de ces hydrates entre eux ou avec du carbonate de sodium anhydre. Ces hydrates et leurs mélanges correspondent dès lors à la formule théorique Na₂CO₃.nH₂O où n désigne un nombre entier ou fractionnaire compris entre 0,5 et 10. Dans ce qui suit, la formule Na₂CO₃.nH₂O est utilisée pour désigner un hydrate du carbonate de sodium, un mélange d'hydrates du carbonate de sodium ou un mélange d'au moins un hydrate du carbonate de sodium avec du carbonate de sodium anhydre. Conformément à l'invention, le composé de métal alcalin comprend du carbonate de sodium hydraté de formule Na₂CO₃.nH₂O où n est de préférence supérieur à 0,7.

Dans le procédé selon l'invention, il est souhaitable que le composé de métal alcalin comprenne au moins 50 % en poids de carbonate de sodium hydraté, les teneurs supérieures à 80 % étant préférées et celles au moins égales à 90 % étant spécialement recommandées. Des composés de métal alcalin qui se sont révélés avantageux sont ceux comprenant entre 95 et 100 % en poids de carbonate de sodium hydraté, ceux comprenant entre 98 et 100 % en poids de carbonate de sodium hydraté étant préférés. En plus du carbonate de sodium hydraté, le composé de métal alcalin peut éventuellement comprendre du bicarbonate de métal alcalin, de préférence du bicarbonate de sodium, par exemple en une quantité comprise entre 0,5 et 2 % en poids.

Dans une forme d'exécution préférée du procédé selon l'invention, on sélectionne du carbonate de sodium hydraté de formule Na₂CO₃.nH₂O dans laquelle n varie de 0,8 à 1,2, par exemple du monohydrate du carbonate de sodium.

Dans cette forme d'exécution préférée du procédé selon l'invention, on utilise avantageusement du carbonate de sodium hydraté obtenu au moyen d'un processus opératoire comprenant une imprégnation de carbonate de sodium anhydre avec de l'eau et un séchage du produit résultant de l'imprégnation à une température supérieure à la température de transition de l'heptahydrate du carbonate de sodium en monohydrate du carbonate de sodium et inférieure à la température d'ébullition de l'eau. Le carbonate de sodium utilisé dans ce processus opératoire peut comprendre de la soude dense, de la soude légère ou un mélange de soude dense et de soude légère. La soude légère, de poids spécifique apparent sensiblement compris entre 550 et 650 kg/m³, est préférée. Dans le processus opératoire qui vient d'être décrit, le carbonate de sodium anhydre est mis en oeuvre à l'état d'une poudre. Celle-ci est avantageusement constituée de particules dont le diamètre n'excède pas 200 µm et est de préférence inférieur à 100 µm, par exemple compris entre 5 et 50 µm. La quantité d'eau mise en oeuvre à l'étape d'imprégnation du carbonate de sodium anhydre doit être au moins égale à la quantité théorique nécessaire pour former du monohydrate du carbonate de sodium par hydratation du carbonate de sodium anhydre. En générale, il est recommandé de mettre en oeuvre une quantité d'eau supérieure à la quantité théorique précitée. On préfère mettre en oeuvre une quantité volumique d'eau supérieure à 0,08 et de préférence au moins égale à 0,1 fois la quantité volumique de carbonate de sodium anhydre. Bien que l'invention n'impose pas de limite supérieure à la quantité d'eau utilisée, il n'y a pas intérêt à exagérer l'excès d'eau, afin de ne pas grever le prix et la durée du séchage ultérieur. D'une manière générale, on n'a pas intérêt à utiliser une quantité volumique d'eau supérieure à 5 fois la quantité volumique de carbonate de sodium anhydre mis en oeuvre. Les quantités volumiques d'eau comprises entre 0,1 et 2 fois la quantité volumique de carbonate de sodium anhydre sont spécialement recommandées, celles comprises entre 0,3 et 1,5 étant préférées. Il est nécessaire de prévoir une période de maturation entre le début de l'imprégnation et le séchage. Cette période de maturation a pour fonction de permettre que la totalité du carbonate de sodium anhydre soit imprégnée par l'eau d'imprégnation et elle dépend dès lors de la granulométrie de la poudre de carbonate de sodium anhydre. Elle peut varier de quelques minutes (par exemple entre 5 et 20 minutes) à plusieurs heures (par exemple entre 15 et 30 heures). Le séchage doit être effectué à une température supérieure à la température de transition de l'heptahydrate du carbonate de sodium en monohydrate du carbonate de sodium. Il a pour fonction de former du monohydrate du carbonate de sodium et d'éliminer l'humidité qui l'imprègne. On sélectionne avec avantage une température de séchage n'excédant pas 60 °C, les températures comprises entre 38 et 50 °C convenant bien. La durée du séchage dépend de la quantité d'eau mise en oeuvre à l'étape d'imprégnation et de la température du séchage.

Le carbonate de sodium hydraté obtenu par le processus opératoire qui vient d'être décrit présente généralement un poids spécifique apparent inférieur à 1200 kg/m³, habituellement compris entre 500 et 1000 kg/m³.

Selon l'invention, on met en oeuvre de l'oxygène et du dioxyde de soufre dans le gaz à épurer. Les quantités d'oxygène et de dioxyde de soufre à mettre en oeuvre dépendent de la concentration du gaz en oxydes d'azote NOₓ, en particulier en oxyde nitrique NO, ainsi que du degré d'épuration recherché en oxyde nitrique et correspondent, en tout état de cause, un rapport molaire O₂/NO supérieur à 2,5, de préférence au moins égal à 7 et à un rapport molaire SO₂/NO supérieur à 0,1, de préférence au moins égal à 0,2. Il n'y a pas intérêt à réaliser des rapports molaires O₂/NO et SO₂/NO qui excèdent respectivement 100 et 10. Les rapports molaires O₂/NO au moins égaux à 15, par exemple compris entre 40 et 60, et les rapports molaires SO₂/NO au moins égaux à 0,3, par exemple compris entre 1 et 2 sont spécialement avantageux.

Dans le procédé selon l'invention, la température est critique et doit se situer entre 320 et 500 K. Des températures recommandées se si tuent entre 325 et 450 K. Les températures situées entre 335 et 430 K sont spécialement avantageuses, celles situées entre 340 et 400 K étant préférées.

Dans le procédé selon l'invention, le carbonate de sodium hydraté doit être mis en oeuvre en une quantité suffisante pour décomposer le dioxyde de soufre et l'oxyde nitrique en formant du sulfate (et éventuellement du sulfite) de sodium, ainsi que du nitrite et du nitrate de sodium. On a en effet observé l'existence d'une synergie dans la décomposition du dioxyde de soufre et de l'oxyde nitrique par le carbonate de sodium hydraté. La quantité de carbonate de sodium hydraté à mettre en oeuvre dépend dès lors des concentrations respectives en dioxyde de soufre et en oxyde nitrique dans le gaz et doit être déterminée dans chaque cas particulier, par exemple, par un travail de routine au laboratoire.

Dans le procédé selon l'invention, le traitement du gaz avec le carbonate de sodium hydraté est opéré par voie sèche. A cet effet, le carbonate de sodium hydraté est mis en oeuvre à l'état solide dans le gaz, en l'absence d'un liquide, en particulier d'eau, sous réserve de l'eau d'hydratation du carbonate de sodium hydraté. Diverses méthodes opératoires peuvent être utilisées. Selon une première méthode opératoire, le carbonate de sodium hydraté est injecté à l'état d'une poudre dans le gaz, a l'intérieur d'une chambre de réaction. Selon une seconde méthode opératoire, on fait circuler le gaz dans un lit fixe, un lit mobile ou un lit fluidisé de particules de carbonate de sodium hydraté. Ces méthodes opératoires sont bien connues dans la technique du génie chimique. Dans celles-ci, on a intérêt à utiliser une poudre de granulométrie régulière et la plus fine possible, de manière à accélérer la réaction du carbonate de sodium hydraté avec le dioxyde de soufre et les oxydes d'azote du gaz. En règle générale, on recommande d'utiliser une poudre dont le diamètre des particules est inférieur à 100 µm. La granulométrie préférée correspond à un diamètre de particules n'excédant pas 50 µm, par exemple compris entre 5 et 15 µm.

Le procédé selon l'invention conduit à la formation d'un résidu solide comprenant du sulfate de sodium, éventuellement de sulfite de sodium, du nitrite de sodium et du nitrate de sodium. Ce résidu peut être facilement éliminé du gaz en traitant ce dernier dans un dispositif de dépoussièrage adéquat qui peut par exemple comprendre un filtre électrostatique ou, de préférence, un filtre à tissus filtrants (filtre à manches) dont l'efficacité est optimum.

Le procédé selon l'invention s'applique à l'épuration de tous gaz contenant des oxydes d'azote NOₓ. Des exemples d'application comprennent l'épuration des fumées provenant de l'incinération d'ordures ménagères ou municipales, l'épuration des fumées provenant de la combustion de biomasses et l'épuration des fumées provenant de la combustion de combustibles soufrés d'origine fossile tels que le gaz naturel, le charbon et les dérivés du pétrole. Il s'applique en particulier à l'épuration des fumées provenant des centrales thermiques de production d'électricité.

Les exemples suivants servent à illustrer l'invention. Ils sont explicités en référence aux figures 1 à 6 des dessins annexés.
La figure 1 est un diagramme représentant la distribution granulométrique cumulative d'une poudre de carbonate de sodium anhydre;
Les figures 2 à 6 sont cinq diagrammes fournissant la composition de gaz contenant des oxydes d'azote NOₓ.

### Première série d'essais.

Les exemples 1, 2, 3 et 4 qui suivent ont trait à la préparation de carbonate de sodium hydraté selon le processus opératoire conforme à l'invention décrit plus haut.

### Exemple 1

Dans une étuve maintenue à la température ambiante, on a introduit 100 cm³ de carbonate de sodium anhydre du type soude légère, puis 40 ml d'eau. Après quelques minutes de maturation, on a obtenu une pâte homogène. On a ensuite réglé la température dans l'étuve entre 40 et 42 °C et on a maintenu cette température durant cinq jours, pour sécher le produit. A l'issue du séchage, on a obtenu une poudre ayant la composition suivante :

| | |
|---|---|
| Na₂CO₃ | 836 g/kg, |
| NaHCO₃ | 16 g/kg, |
| H₂O | 148 g/kg. |

Dans ce produit, l'eau est présente sous la forme d'eau d'hydratation du carbonate de sodium, de sorte que la quasi totalité de ce dernier est du monohydrate du carbonate de sodium.

### Exemple 2

On a répété l'essai de l'exemple 1, en mettant en oeuvre dans l'étuve 100 cm³ de carbonate de sodium anhydre et 50 ml d'eau. L'opération de séchage, effectuée à une température située entre 40 et 42 °C, a duré 6 jours. A l'issue du séchage, on a obtenu une poudre ayant la composition suivante :

| | |
|---|---|
| Na₂CO₃ | 846 g/kg, |
| NaHCO₃ | 0 g/kg, |
| H₂O | 154 g/kg. |

Dans ce produit, la quasi totalité de l'eau est de l'eau d'hydratation du carbonate de sodium, de sorte que ce dernier se trouve quasi totalement à l'état de monohydrate du carbonate de sodium. On a mesuré pour la poudre un poids spécifique apparent égal à 890 kg/m³.

### Exemple 3

On a répété l'essai de l'exemple 1, en mettant en oeuvre dans l'étuve 100 cm³ de carbonate de sodium anhydre et 65 ml d'eau. L'opération de séchage, effectuée à une température située entre 40 et 42 °C, a duré 6 jours. A l'issue du séchage, on a obtenu une poudre ayant la composition suivante :

| | |
|---|---|
| Na₂CO₃ | 830 g/kg, |
| NaHCO₃ | 12 g/kg, |
| H₂O | 158 g/kg. |

Dans ce produit, la quasi totalité de l'eau est présente sous la forme d'eau d'hydratation du carbonate de sodium, de sorte qu'approximativement la totalité de celui-ci est du monohydrate du carbonate de sodium.

### Exemple 4

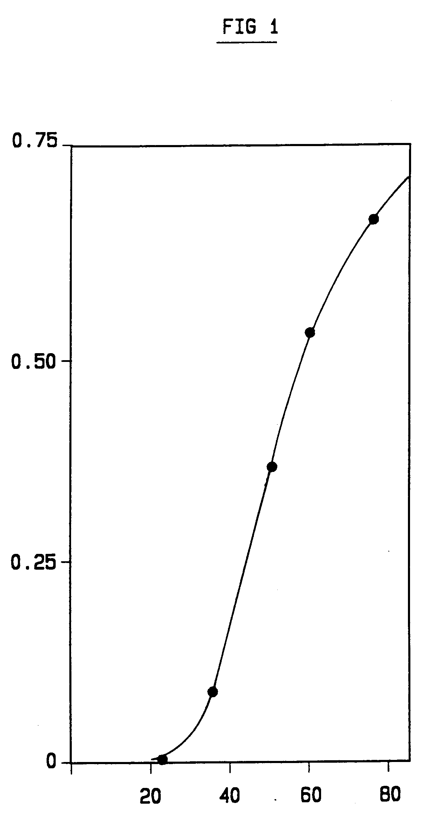

Dans une étuve maintenue à la température ambiante, on a introduit du carbonate de sodium anhydre et de l'eau distillée, dans un rapport massique eau/Na₂CO₃ sensiblement égal à 0,485. Le carbonate de sodium a été mis en oeuvre à l'état d'une poudre dont la distribution granulométrique est représentée sur le diagramme de la figure 1, dans laquelle l'axe des abscisses représente le diamètre des particules (en µm) et l'axe des ordonnées exprime les fractions granulométriques pondérales cumulées. Au rapport pondéral précité correspond un rapport volumique eau/Na₂CO₃ égal à 1,217. Après un temps de maturation d'environ 10 minutes, on a réglé la température dans l'étuve à environ 45 °C et on a maintenu cette température pendant environ 24 heures, de manière à obtenir un produit friable. Celui-ci s'est révélé être constitué quasi totalement de monohydrate de carbonate de sodium.

### Seconde série d'essais

Les exemples 5, 6, 7, 8 et 9 qui suivent sont conformes à l'invention et ont trait au traitement d'un gaz contenant de l'oxyde nitrique avec du carbonate de sodium hydraté obtenu conformément à l'exemple 4.

### Exemple 5

On a préparé un gaz synthétique constitué pour l'essentiel d'argon, d'oxyde nitrique, de dioxyde de soufre et d'oxygène, ayant la composition volumique suivante :

| | |
|---|---|
| NO | 413 µl/l de gaz, |
| SO₂ | 150 µl/l de gaz, |
| O₂ | 22980 µl/l de gaz. |

On a par ailleurs préparé un lit de 6 g d'un produit conforme à celui obtenu à l'exemple 4 (comprenant plus de 98 % en poids de monohydrate du carbonate de sodium), reposant sur une grille horizontale. Dans le lit on a utilisé des particules présentant un diamètre moyen de 10 µm environ.

On a soumis le gaz à un déplacement ascendant uniforme à travers le lit, à une vitesse réglée pour le fluidiser.

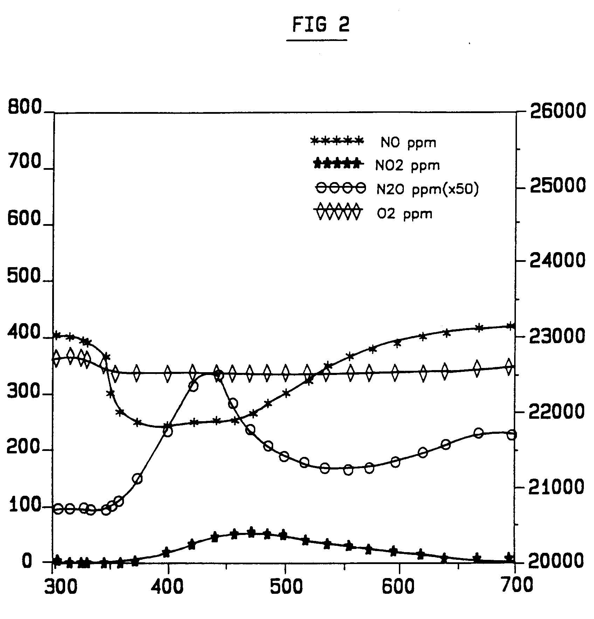

Au cours de l'essai, on a fait monter graduellement la température du gaz dans le lit jusqu'à 700 K et on a enregistré la composition du gaz entre 300 K et 700 K. Les résultats de l'essai sont reportés sur le diagramme de la figure 2. Dans ce diagramme, l'échelle des abscisses représente la température du gaz à l'entrée du lit (exprimée en degrés Kelvin), l'échelle des ordonnées de gauche représente la concentration volumique de chacun des constituants NO, NO₂ et N₂O du gaz à la sortie du lit (ces concentrations étant exprimées en ppm ou µl du constituant/l de gaz et devant être divisées par 50 dans le cas du N₂O) et l'échelle des ordonnées de droite représente la concentration volumique d'oxygène dans le gaz à la sortie du lit (exprimée en ppm ou µl d'oxygène par l de gaz). On observe que le gaz a subi une épuration optimum en oxyde nitrique aux températures situées entre environ 360 et 480 K. A la température d'environ 385 K, le gaz épuré contient une teneur minimum en oxydes d'azote NOₓ.

### Exemple 6

On a répété l'essai de l'exemple 5 avec un gaz synthétique présentant la composition volumique suivante :

| | |
|---|---|
| NO | 414 µl/l, |
| SO₂ | 675 µl/l, |
| O₂ | 22450 µl/l. |

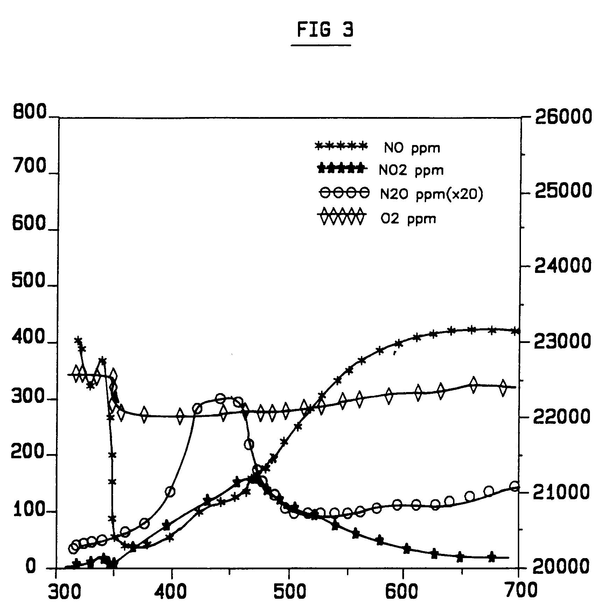

On a procédé comme à l'exemple 5. Les résultats de l'essai sont reproduits sur le diagramme de la figure 3, dans lequel les échelles des abscisses et des ordonnées ont la même définition qu'à la figure 2 (les concentrations de l'échelle des ordonnées de gauche devant toutefois être divisées par 20 dans le cas du N₂O).

On observe que le gaz a subi une épuration optimum en oxyde nitrique aux températures situées entre environ 345 et 410 K. L'épuration en oxydes d'azote NOₓ est optimum à la température d'environ 350 K, le gaz à la sortie du lit présentant alors la composition suivante :

| | |
|---|---|
| NO | 43 µl/l; |
| NO₂ | 43 µl/l; |
| N₂O | 3 µl/l; |
| O₂ | 22.000 µl/l; |

### Exemple 7

On a répété l'essai de l'exemple 5 avec un gaz synthétique présentant la composition volumique suivante :

| | |
|---|---|
| NO | 418 µl/l, |
| SO₂ | 675 µl/l, |
| O₂ | 3220 µl/l. |

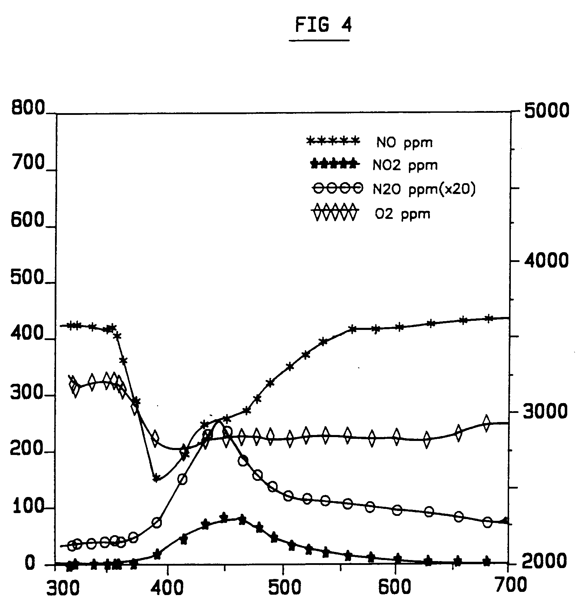

On a procédé comme à l'exemple 5. Les résultats de l'essai sont reproduits sur le diagramme de la figure 4, dans lequel les échelles des abscisses et des ordonnées ont la même définition qu'à la figure 2 (les concentrations de l'échelle des ordonnées de gauche devant toutefois être divisées par 20 dans le cas du N₂O).

On observe que le gaz a subi une épuration optimum en oxyde nitrique aux températures situées entre environ 375 et 425 K. L'épuration en oxydes d'azote NOₓ est optimum à la température d'environ 385 K, le gaz à la sortie du lit présentant alors la composition suivante :

| | |
|---|---|
| NO | 165 µl/l; |
| NO₂ | 0 µl/l; |
| N₂O | 3 µl/l; |
| O₂ | 2900 µl/l; |

### Exemple 8

On a répété l'essai de l'exemple 5 avec un gaz synthétique présentant la composition volumique suivante :

| | |
|---|---|
| NO | 417 µl/l, |
| SO₂ | 675 µl/l, |
| O₂ | 1170 µl/l. |

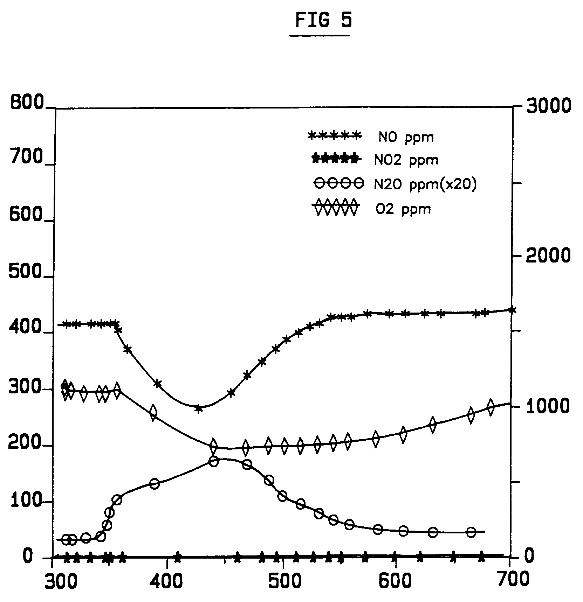

On a procédé code à l'exemple 5. Les résultats de l'essai sont reproduits sur le diagramme de la figure 5, dans lequel les échelles des abscisses et des ordonnées ont la même définition qu'à la figure 2 (les concentrations de l'échelle des ordonnées de gauche devant toutefois être divisées par 20 dans le cas du N₂O).

On observe que le gaz a subi une épuration optimum en oxyde nitrique aux températures situées entre environ 400 et 450 K. L'épuration en oxydes d'azote NOₓ est optimum à la température d'environ 425 K.

### Exemple 9

On a répété l'essai de l'exemple 5 avec un gaz synthétique présentant la composition volumique suivante :

| | |
|---|---|
| NO | 412 µl/l, |
| SO₂ | 35 µl/l, |
| O₂ | 22930 µl/l. |

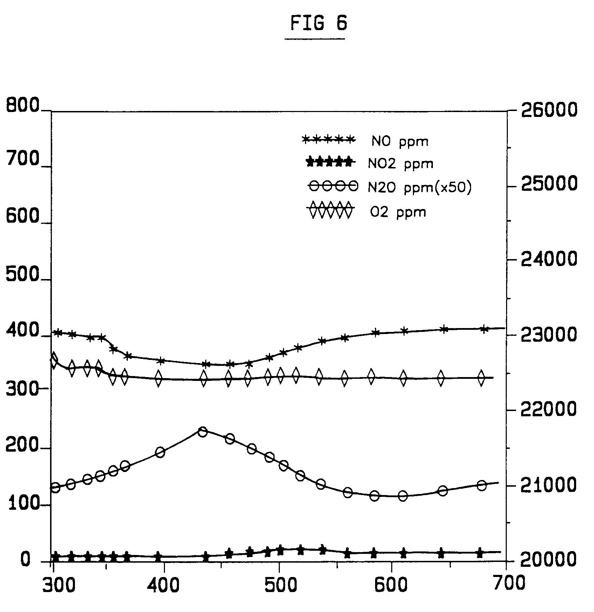

On a procédé comme à l'exemple 5. Les résultats de l'essai sont reproduits sur le diagramme de la figure 6, dans lequel les échelles des abscisses et des ordonnées ont la même définition qu'à la figure 2 (les concentrations de l'échelle des ordonnées de gauche devant être divisées par 50 dans le cas du N₂O).

On observe que l'épuration du gaz en oxydes d'azote est négligeable. Ce faible rendement d'épuration est imputable à une concentration trop faible en dioxyde de soufre dans le gaz soumis à l'épuration.

Un examen comparatif des résultats des exemples 5 à 9 fait immédiatement apparaître que le rendement de l'épuration en oxydes d'azote NOₓ (spécialement en oxyde nitrique NO) est influencé de manière critique par la température et les teneurs du gaz en dioxyde de soufre et en oxygène.

## Revendications

1. Procédé pour épurer un gaz en oxyde nitrique, selon lequel on traite le gaz avec un composé de métal alcalin comprenant du carbonate de sodium hydrate, selon lequel le carbonate de sodium hydraté correspond à la formule théorique Na₂CO₃.nH₂O dans laquelle n désigne un nombre entier ou fractionnaire compris entre 0,5 et 10, on met en oeuvre de l'oxygène et du dioxyde de soufre dans le gaz, en quantités réglées pour y réaliser des rapports molaires O₂/NO supérieur à 2,5 et SO₂/NO supérieur à 0,1 et on traite le gaz avec le carbonate de sodium hydraté par voie sèche, à une température de 320 à 500 K.

2. Procédé selon la revendication 1, caractérisé en ce que le composé de métal alcalin contient au moins 95 % en poids de carbonate de sodium hydraté.

3. Procédé selon la revendication 2, caractérisé en ce que le carbonate de sodium hydraté correspond à la formule théorique Na₂CO₃.nH₂O dans laquelle n désigne un nombre entier ou fractionnaire compris entre 0,8 et 1,2.

4. Procédé selon la revendication 3, caractérisé en ce que le carbonate de sodium hydraté comprend du monohydrate du carbonate de sodium.

5. Procédé selon l'une quelconque des revendications 1 à 4, caractérisé en ce qu'on met en oeuvre du carbonate de sodium hydraté obtenu par imprégnation de carbonate de sodium anhydre avec de l'eau et séchage du produit résultant de l'imprégnation à une température supérieure à la température de transition de l'heptahydrate du carbonate de sodium en monohydrate du carbonate de sodium.

6. Procédé selon la revendication 5, caractérisé en ce que le séchage est opéré à une température comprise entre 38 et 45°C.

7. Procédé selon la revendication 5 ou 6, caractérisé en ce que, pour l'imprégnation du carbonate de sodium anhydre, on met en oeuvre une quantité volumique d'eau comprise entre 0,3 et 1,5 fois la quantité volumique de carbonate de sodium.

8. Procédé selon l'une quelconque des revendications 5 à 7, caractérisé en ce que le carbonate de sodium anhydre soumis à l'imprégnation est de la soude légère.

9. Procédé selon l'une quelconque des revendications 1 à 8, caractérisé en ce qu'on met en oeuvre un rapport molaire O₂/NO compris entre 40 et 60 et un rapport molaire SO₂/NO compris entre 1,5 et 2.

10. Procédé selon l'une quelconque des revendications 1 à 9, caractérisé en ce qu'il est applicable aux fumées provenant de la combustion d'un combustible soufré d'origine fossile, de l'incinération d'ordures ménagères ou municipales ou de la combustion de biomasses.

## Claims

1. Process for purifying a gas to remove nitric oxide, according to which the gas is treated with an alkali metal compound comprising sodium carbonate hydrate, in which the sodium carbonate hydrate corresponds to the theoretical formula Na₂CO₃·nH₂O in which n denotes a whole or fractional number between 0.5 and 10, oxygen and sulphur dioxide are used in the gas in quantities adapted to produce in the gas an O₂/NO molar ratio higher than 2.5 and a SO₂/NO molar ratio higher than 0.1 and the treatment of the gas with the sodium carbonate hydrate is performed by a dry route at a temperature of 320 to 500 K.

2. Process according to Claim 1, characterised in that the alkali metal compound contains at least 95 % by weight of sodium carbonate hydrate.

3. Process according to Claim 2, characterised in that the sodium carbonate hydrate corresponds to the theoretical formula Na₂CO₃.nH₂O in which n denotes a whole or fractional number between 0.8 and 1.2.

4. Process according to Claim 3, characterised in that the sodium carbonate hydrate comprises sodium carbonate monohydrate.

5. Process according to any one of Claims 1 to 4, characterised in that sodium carbonate hydrate is used, obtained by impregnation of anhydrous sodium carbonate with water and drying of the product resulting from the impregnation at a temperature above the temperature of transition of sodium carbonate heptahydrate into sodium carbonate monohydrate.

6. Process according to Claim 5, characterised in that the drying is performed at a temperature between 38 and 45°C.

7. Process according to Claim 5 or 6, characterised in that a quantity by volume of water of between 0.3 and 1.5 times the quantity by volume of sodium carbonate is used for the impregnation of the anhydrous sodium carbonate.

8. Process according to any one of Claims 5 to 7, characterised in that the anhydrous sodium carbonate subjected to the impregnation is light soda.

9. Process according to any one of claims 1 to 8, characterised in that an O₂/NO molar ratio of between 40 and 60 and an SO₂/NO molar ratio of between 1.5 and 2 are used.

10. Process according to any one of Claims 1 to 9, characterised in that it is applicable to the fumes produced by the burning of a sulphur-containing fuel of fossil origin, from the incineration of domestic or municipal refuse or from the combustion of biomasses.

## Patentansprüche

1. Verfahren zum Reinigen eines Gases von Stickstoffoxid, gemäß dem man das Gas mit einer Alkalimetallverbindung, die Natriumcarbonat-Hydrat umfaßt, behandelt, gemäß dem das Natriumcarbonat-Hydrat der theoretischen Formel Na₂CO₃·nH₂O entspricht, in der n eine ganze oder gebrochene Zahl zwischen 0,5 und 10 bezeichnet, man in dem Gas Sauerstoff und Schwefeldioxid in Mengen verwendet, die eingestellt sind, um darin Molverhältnisse O₂/NO größer als 2,5 und SO₂/NO größer als 0,1 herzustellen, und man das Gas mit dem Natriumcarbonat-Hydrat trocken bei einer Temperatur von 320 bis 500 K behandelt.

2. Verfahren gemäß Anspruch 1, dadurch gekennzeichnet, daß die Alkalimetallverbindung wenigstens 95 Gew.-% Natriumcarbonat-Hydrat enthält.

3. Verfahren gemäß Anspruch 2, dadurch gekennzeichnet, daß das Natriumcarbonat-Hydrat der theoretischen Formel Na₂CO₃·nH₂O entspricht, in der n eine ganze oder gebrochene Zahl zwischen 0,8 und 1,2 bezeichnet.

4. Verfahren gemäß Anspruch 3, dadurch gekennzeichnet, daß das Natriumcarbonat-Hydrat Natriumcarbonat-Monohydrat umfaßt.

5. Verfahren gemäß einem der Ansprüche 1 bis 4, dadurch gekennzeichnet, daß man Natriumcarbonat-Hydrat verwendet, das durch Tränken von wasserfreiem Natriumcarbonat mit Wasser und Trocknen des aus dem Tränken resultierenden Produkts bei einer Temperatur, die höher als die Umwandlungstemperatur des Natriumcarbonat-Heptahydrats in Natriumcarbonat-Monohydrat ist, erhalten wird.

6. Verfahren gemäß Anspruch 5, dadurch gekennzeichnet, daß das Trocknen bei einer Temperatur zwischen 38 und 45 °C durchgeführt wird.

7. Verfahren gemäß Anspruch 5 oder 6, dadurch gekennzeichnet, daß man für das Imprägnieren des wasserfreien Natriumcarbonats eine Volumenmenge an Wasser verwendet, die zwischen dem 0,3 und 1,5fachen der Volumenmenge an Natriumcarbonat beträgt.

8. Verfahren gemäß einem der Ansprüche 5 bis 7, dadurch gekennzeichnet daß das wasserfreie Natriumcarbonat, das getränkt wird, leichte Soda ist.

9. Verfahren gemäß einem der Ansprüche 1 bis 8, dadurch gekennzeichnet, daß man ein Molverhältnis O₂/NO zwischen 40 und 60 und ein Molverhältnis SO₂/NO zwischen 1,5 und 2 verwendet.

10. Verfahren gemäß einem der Ansprüche 1 bis 9, dadurch gekennzeichnet, daß es auf Rauchgase anwendbar ist, die aus der Verbrennung eines schwefelhaltigen Brennstoffs fossilen Ursprungs, aus der Verbrennung von Haus- oder Kommunalmüll oder aus der Verbrennung von Biomassen stammt.
